# EUROPEAN PATENT SPECIFICATION

(11) **EP 4 205 976 B1**
(45) Date of publication and mention of the grant of the patent: **12.02.2025**
(21) Application number: 21217923.8
(22) Date of filing: 28.12.2021
(51) Int. Cl.: B32B 37/06, B32B 37/10, B32B 37/14, B30B 5/06

(54) **LAMINATION DEVICE**
LAMINIERVORRICHTUNG
DISPOSITIF DE STRATIFICATION

(43) Date of publication of application: 05.07.2023
(73) Proprietor: Guangdong Willing Technology Corporation, Huizhou, Guangdong (CN)
(72) Inventor: Ye, Jingnong, Huizhou, Guangdong (CN)
(74) Representative: Horak, Michael

(56) References cited:
- US-A- 4 755 252
- US-A1- 2013 260 211
- US-B2- 8 900 397

## Description

### BACKGROUND OF THE INVENTION

### (a) Technical Field of the Invention

The present invention is generally related to lamination devices, and more particular to a lamination device providing fast thermal sealing.

### (b) Description of the Prior Art

For a conventional lamination device, an object to be laminated, usually a piece of paper or a picture, is first sandwiched in a plastic wrapping and then fed through the lamination device, where the object is thermally sealed in the plastic wrapping by heating element of the lamination device for protection and preservation.

Usually, there is a pair of adjacent rollers, and the object is delivered between the rollers and then into the lamination device. Heaters are, therefore, configured besides the rollers for thermal sealing.

This type of thermal sealing requires that the lamination device be turned on in advance for a while for pre-heating. In other words, if the lamination device is used immediately, the thermal sealing may not be satisfactory, as its heater does not have a high enough temperature.

US 2013/260211 A1 discloses a device for laminating an electrode assembly including a cathode, an anode and a separator interposed therebetween laminated in this order by thermal bonding, the device including an inlet, through which a web having the cathode/separator/anode laminate structure is fed, a heater to heat the web and thereby induce thermal bonding between the cathode, the separator and the anode, an outlet through which the thermally bonded web is discharged, and a transporter to transport the web through the inlet, the heater and the outlet, wherein the transporter imparts a transport driving force to the web in a state that the transporter contacts at least one of the top and the bottom of the web and the heater directly heats a region of the transporter contacting the web and thereby transfers thermal bonding energy to the web.

US 8 900 397 B2 discloses an apparatus to manufacture joined laminated media and a method therefor. The joined laminated media that are manufactured from the membrane materials and that are joined by being pressed have no displacement, deformation of the membrane materials, or any defect in joining the boundary faces of the laminated materials, and are efficiently manufactured in a good yield. The apparatus can manufacture a joined laminated-media where the laminated media are placed in the housing space that is formed by a pair of endless belts and the sealing member. The laminated media are then transported in a state where the laminated media are fixed by the pair of endless belts that are closely attached to the laminated media because the air is discharged from the housing space through the discharge holes and they are joined by being pressed in the hot-press section and cold-press section.

### SUMMARY OF THE INVENTION

A major objective of the present invention is to achieve fast thermal sealing through efficient pre-heating by heating elements and pre-heat pieces.

To achieve the objective, the lamination device includes a main member, an input slot on the main member, an output slot on the main member opposite to the input slot, a left plate inside the main member, a right plate inside the main member, a first input shaft inside the main member whose two ends are pivotally joined to the left plate and the right plate, a second input shaft inside the main member whose two ends are pivotally joined to the left plate and the right plate, a first output shaft inside the main member whose two ends are pivotally joined to the left plate and the right plate, a second output shaft inside the main member whose two ends are pivotally joined to the left plate and the right plate, a power element inside the main member coupling and engaging the first output shaft and second output shaft, a first transmission belt surrounding the first input shaft and the first output shaft, a second transmission belt surrounding the second input shaft and second output shaft, and a number of heater members respectively surrounded by the first transmission belt and the second transmission belt, where each heater member includes a heating element and a pre-heat piece wrapping the heating element, such that heat produced from the heating elements is conducted to the first transmission belt, the second transmission belt, and the pre-heat pieces, wherein the left plate is configured with a left elastic member; and the left elastic member comprises a left stretching element laterally contacting left ends of the first input shaft and the second input shaft, and a plurality of left elastic elements laterally pressing the left stretching element, and wherein the right plate is configured with a right elastic member; and the right elastic member comprises a right stretching element laterally contacting right ends of the first input shaft and the second input shaft, and a plurality of right elastic elements laterally pressing the right stretching element.

A to-be-laminated object is inserted into the main member through the input slot. In the meantime, the power element spins the first output shaft and the second output shaft, which in turn drive the first transmission belt and the second transmission belt to roll, thereby carrying the object to move. The first transmission belt and the second transmission belt also engages the first input shaft and second input shaft to spin, and the thermally sealed object is delivered out from the output slot.

To achieve thermal sealing, the heater members are turned on so that the heating elements produce heat for sealing. The heat is also conducted to the pre-heat pieces, the first transmission belt, and the second transmission belt. As the to-be-laminated object is carried between the first transmission belt and the second transmission belt, it first reaches the pre-heat pieces and as such pre-heated. The object then reaches the heating elements for thermal sealing. Therefore, the lamination device provides effective pre-heating without turning on the lamination device in advance.

Through the above-described design, the disclosed lamination device overcomes the problem of inferior efficiency suffered by conventional lamination devices

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a perspective diagram showing a lamination device according to a first embodiment of the present invention.
FIG. 2 is a perspective breakdown diagram showing the lamination device of FIG 1.
FIG. 3 is a cross-sectional diagram showing the lamination device of FIG 1.
FIG. 4 is a cross-sectional diagram showing an operation scenario of the lamination device of FIG 1.
FIG. 5 is a perspective diagram showing a lamination device according to a second embodiment of the present invention.
FIG. 6 is a perspective breakdown diagram showing the lamination device of FIG 5.
FIG. 7 is a cross-sectional diagram showing an operation scenario of the lamination device of FIG 5.
FIG. 8 is another cross-sectional diagram showing an operation scenario of the lamination device of FIG 5.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

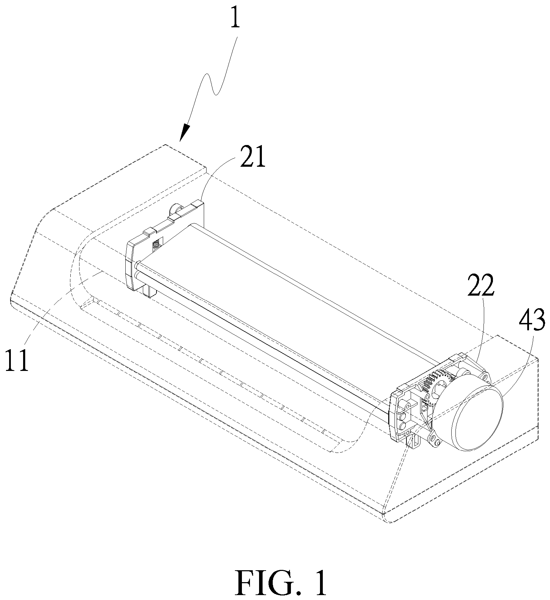

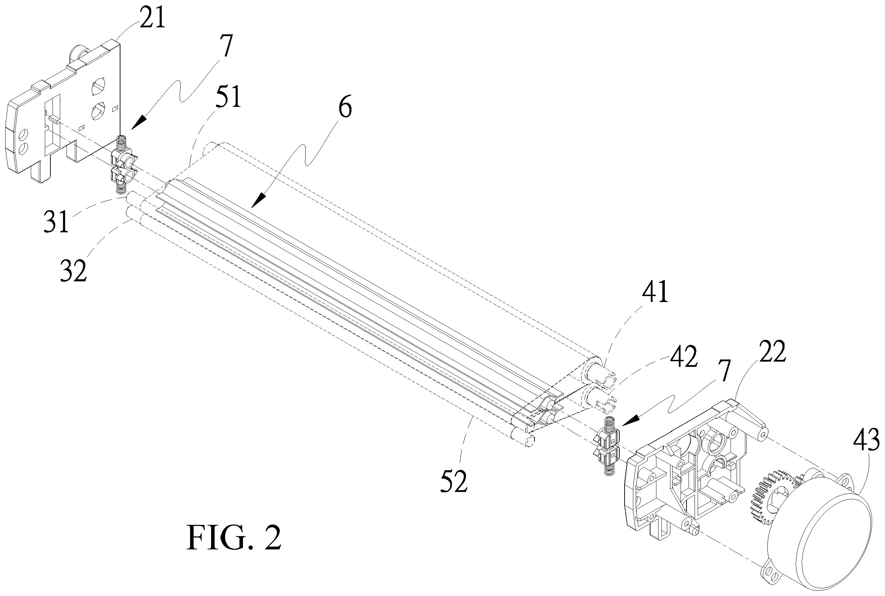

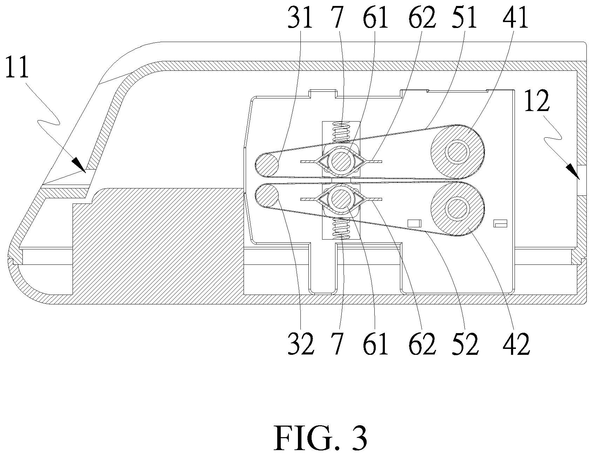

As shown in FIGS. 1 to 3, a lamination device according to a first embodiment of the present invention includes:
a main member 1;
an input slot 11 on a front side of the main member 1;
an output slot 12 on a back side of the main member 1 opposite to the input slot 11;
a left plate 21 inside the main member 1 and adjacent to a left side of the main member;
a right plate 22 inside the main member 1 and adjacent to a right side of the main member opposite to the left plate 21;
a first input shaft 31 inside the main member 1 whose two ends pivotally joined to the left plate 21 and the right plate 22, respectively;
a second input shaft 32 inside the main member 1 whose two ends pivotally joined to the left plate 21 and the right plate 22, respectively;
a first output shaft 41 inside the main member 1 whose two ends pivotally joined to the left plate 21 and the right plate 22, respectively;
a second output shaft 42 inside the main member 1 whose two ends pivotally joined to the left plate 21 and the right plate 22, respectively, where, in the present embodiment, the first output shaft 41 and the second output shaft 42 have their cross-sectional radiuses greater than those of the first input shaft 31 and the second input shaft 32, and the first output shaft 41 and the second output shaft 42 are positioned laterally behind the first input shaft 31 and the second input shaft 32 (i.e., closer to the back side of the main member 1);
a power element 43 inside the main member lengaging the first output shaft 41 and second output shaft 42 where, in the present embodiment, the power element 43 is a servo motor and the power element 43 also engages the first input shaft 31 and second input shaft 32 through gears;
a first transmission belt 51 surrounding the first input shaft 31 and first output shaft 41;
a second transmission belt 52 surrounding the second input shaft 32 and second output shaft 42;
a number of elongated heater members 6 inside the main member 1 and respectively surrounded by the first transmission belt 51 and the second transmission belt 52, where each heater member 6 has its two ends movably joined to the left plate and the right plate respectively, and includes an elongated heating element 61 and a pre-heat piece 62 wrapping the heating element 61; and
a number of elastic support elements 7 respectively on the left plate 21 and the right plate 22 supporting the two ends of the heater members 6.

The operation of the lamination device is described as follows.

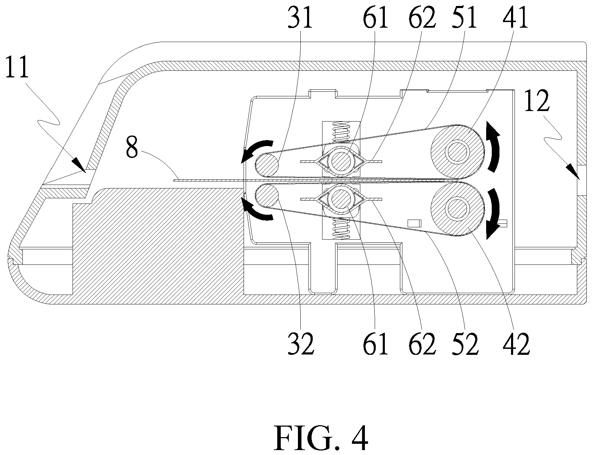

As shown in FIGS. 1 to 4, a to-be-laminated object 8 is inserted into the main member 1 through the input slot 11. In the meantime, the power element 43 engages the first output shaft 41 and the second output shaft 42 to spin, which in turn drives the first transmission belt 51 and the second transmission belt 52 to roll. The first transmission belt 51 and the second transmission belt 52 in turn drive the first input shaft 31 and the second input shaft 32 to spin, thereby moving the to-be-laminated object 8 between the first transmission belt 51 and the second transmission belt 52.

To conduct thermal sealing, the heating elements 61 of the heater members 6 are turned on while the elastic support elements 7 push the heater members 6 against the first transmission belt 51 and the second transmission belt 52, respectively. As such, the heat produced from the heating elements 61 is conducted to the first transmission belt 51, the second transmission belt 52, and the pre-heat pieces 62.

As the object 8 runs between the first transmission belt 51 and the second transmission belt 52, the object 8 first reaches the pre-heat pieces 62 and is, as such, pre-heated by the pre-heat pieces 62. The object 8 then reaches the heating elements 61 where the object 8's thermal sealing is achieved. The thermally sealed object 8 is then delivered out through the output slot 12. The object 8 is carried by the first transmission belt 51 and the second transmission belt 52, thereby moving a longer distance for heating. Together with the pre-heating offered by the pre-heat pieces 62, the heating elements 61 may achieve faster thermal sealing without wasting time in pre-heating, thereby enhancing the efficiency of the lamination device.

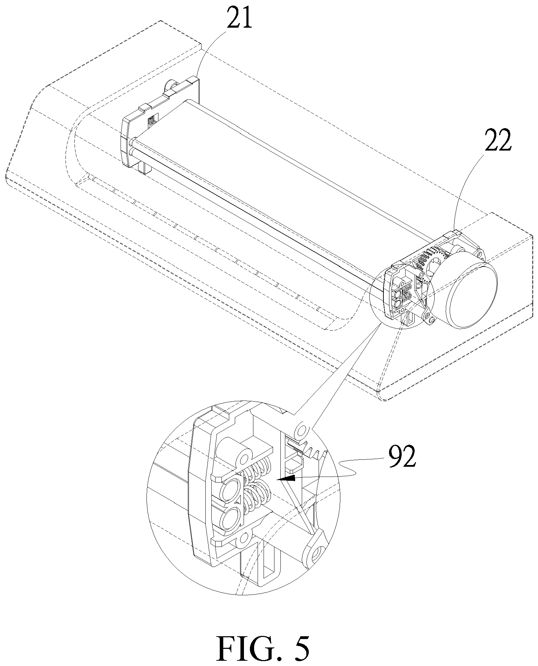

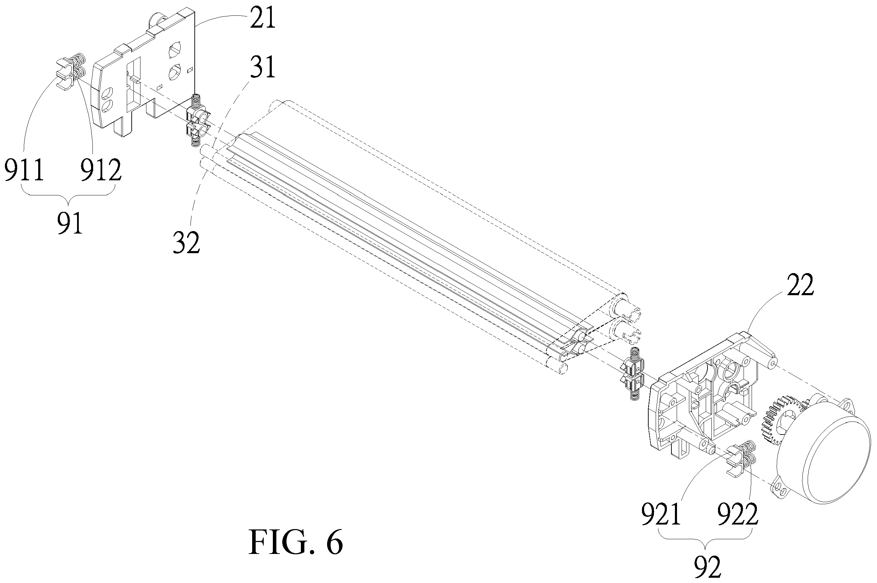

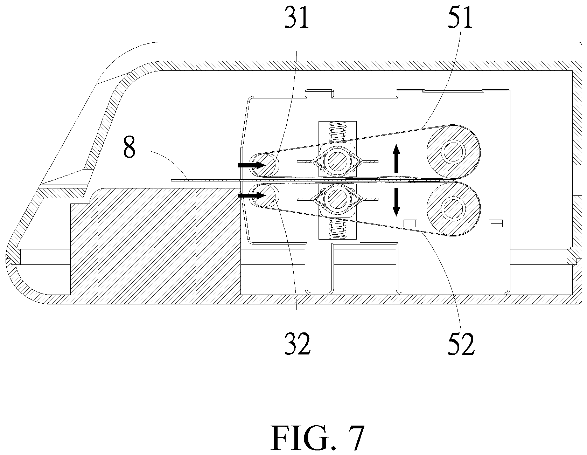

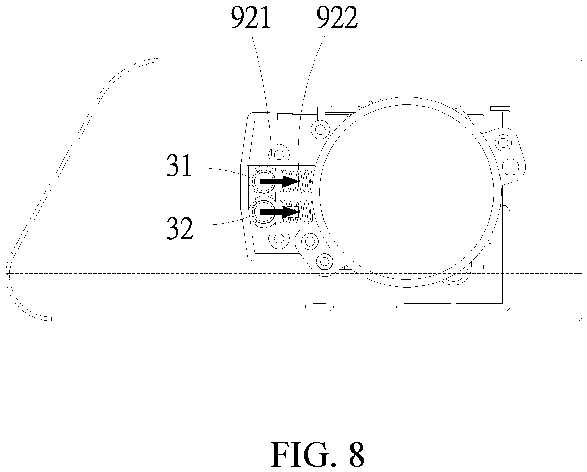

As shown in FIGS. 5 to 8, a second embodiment of the lamination device is similar to the previous embodiment except that the left plate 21 and the right plate 22 are respectively configured with a left elastic member 91 and a right elastic member 92. The left elastic member 91 includes a left stretching element 911 laterally contacting left ends of the first input shaft 31 and the second input shaft 32, and a number of left elastic elements 912 laterally pressing the left stretching element 911. The right elastic member 92 includes a right stretching element 921 laterally contacting the first input shaft 31 and the second input shaft 32, and a number of right elastic element 922 laterally pressing the right stretching element 921.

During the operation of the lamination device, the first input shaft 31 and the second input shaft 32 are pressed by the left stretching element 911 of the left elastic member 91 and the right stretching element 921 of the right elastic member 92 as they are pushed by the expansion of the left elastic elements 912 and the right elastic elements 922. As such, the first transmission belt 51 and the second transmission belt 52 are stretched and tightened, thereby increasing contact area between the object 8 and the first and second transmission belts 51 and 52, and making the movement of the object 8 more reliable and smoother. When the object 8 is too thick or has bulges, the object 8 may deform the first transmission belt 51 and the second transmission belt 52. In the present embodiment, the first input shaft 31 and the second input shaft 32 may compress the left elastic member 91 and the right elastic member 92 in response to the object 8's thickness or unevenness so that the first transmission belt 51 and the second transmission belt 52 may still be completely attached to the object 8.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the claims of the present invention.

## Claims

1. A lamination device, comprising:
a main member (1);
an input slot (11) on a front side of the main member (1);
an output slot (12) on a back side of the main member (1) opposite to the input slot (11);
a left plate (21) inside the main member (1) and adjacent to a left side of the main member (1);
a right plate (22) inside the main member (1) and adjacent to a right side of the main member (1) opposite to the left plate (21);
a first input shaft (31) inside the main member (1) adjacent to the input slot (11) whose two ends pivotally joined to the left plate (21) and the right plate (22), respectively;
a second input shaft (32) inside the main member (1) adjacent to the input slot (11) whose two ends pivotally joined to the left plate (21) and the right plate (22), respectively;
a first output shaft (41) inside the main member (1) adjacent to the output slot (12) whose two ends pivotally joined to the left plate (21) and the right plate (22), respectively;
a second output shaft (42) inside the main member (1) adjacent to the output slot (12) whose two ends pivotally joined to the left plate (21) and the right plate (22), respectively;
a power element (43) inside the main member (1) coupling and engaging the first output shaft (41) and second output shaft (42);
a first transmission belt (51) surrounding the first input shaft (31) and first output shaft (41);
a second transmission belt (52) surrounding the second input shaft (32) and second output shaft (42); and
a plurality of heater members (6) inside the main member (1) and respectively surrounded by the first transmission belt (51) and the second transmission belt (52), where each heater member (6) comprises a heating element (61) and a pre-heat piece (62) wrapping the heating element (61), such that heat produced from the heating elements (61) is conducted to the first transmission belt (51), the second transmission belt (52), and the pre-heat pieces (62),
wherein the left plate (21) is configured with a left elastic member (91); and the left elastic member (91) comprises a left stretching element (911) laterally contacting left ends of the first input shaft (31) and the second input shaft (32), and a plurality of left elastic elements (912) laterally pressing the left stretching element (911), and
wherein the right plate (22) is configured with a right elastic member (92); and the right elastic member (92) comprises a right stretching element (921) laterally contacting right ends of the first input shaft (31) and the second input shaft (32), and a plurality of right elastic elements (922) laterally pressing the right stretching element (921).

2. The lamination device according to claim 1, wherein the power element (43) engages the first input shaft (31) and the second input shaft (32) through gears.

3. The lamination device according to claim 1, wherein each heater member (6) has its two ends movably joined to the left plate (21) and the right plate (22), respectively.

4. The lamination device according to claim 3, wherein a plurality of elastic support elements (7) are respectively configured on the left plate (21) and the right plate (22) supporting the two ends of the heater members (6).

5. The lamination device according to claim 1, wherein the first output shaft (41) and the second output shaft (42) have cross-sectional radiuses greater than those of the first input shaft (31) and the second input shaft (32).

## Patentansprüche

1. Laminiervorrichtung, die Folgendes umfasst:
ein Hauptelement (1);
einen Eingabeschlitz (11) an einer Vorderseite des Hauptelements (1);
einen Ausgabeschlitz (12) an einer Rückseite des Hauptelements (1) gegenüber dem Eingabeschlitz (11);
eine linke Platte (21) in dem Hauptelement (1) und neben einer linken Seite des Hauptelements (1);
eine rechte Platte (22) in dem Hauptelement (1) und neben einer rechten Seite des Hauptelements (1) gegenüber der linken Platte (21);
eine erste Eingangswelle (31) in dem Hauptelement (1) neben dem Eingabeschlitz (11), deren zwei Enden schwenkbar mit der linken Platte (21) bzw. der rechten Platte (22) verbunden sind;
eine zweite Eingangswelle (32) in dem Hauptelement (1) neben dem Eingabeschlitz (11), deren zwei Enden schwenkbar mit der linken Platte (21) bzw. der rechten Platte (22) verbunden sind;
eine erste Ausgangswelle (41) in dem Hauptelement (1) neben dem Ausgabeschlitz (12), deren zwei Enden schwenkbar mit der linken Platte (21) bzw. der rechten Platte (22) verbunden sind;
eine zweite Ausgangswelle (42) in dem Hauptelement (1) neben dem Ausgabeschlitz (12), deren zwei Enden schwenkbar mit der linken Platte (21) bzw. der rechten Platte (22) verbunden sind;
ein Leistungselement (43) in dem Hauptelement (1), das die erste Ausgangswelle (41) und die zweite Ausgangswelle (42) koppelt und in Eingriff bringt;
einen ersten Treibriemen (51), der die erste Eingangswelle (31) und die erste Ausgangswelle (41) umgibt;
einen zweiten Treibriemen (52), der die zweite Eingangswelle (32) und die zweite Ausgangswelle (42) umgibt; und
eine Vielzahl von Heizelementen (6) in dem Hauptelement (1), die jeweils von dem ersten Treibriemen (51) und dem zweiten Treibriemen (52) umgeben sind, wobei jedes Heizelement (6) ein Heizelement (61) und ein Vorheizstück (62) umfasst, das das Heizelement (61) umhüllt, so dass die von den Heizelementen (61) erzeugte Wärme an den ersten Treibriemen (51), den zweiten Treibriemen (52) und die Vorheizstücke (62) geleitet wird,
wobei die linke Platte (21) mit einem linken elastischen Element (91) konfiguriert ist; und das linke elastische Element (91) ein linkes Dehnungselement (911), das die linken Enden der ersten Eingangswelle (31) und der zweiten Eingangswelle (32) seitlich berührt, und eine Vielzahl von linken elastischen Elementen (912) umfasst, die seitlich auf das linke Dehnungselement (911) drücken, und
wobei die rechte Platte (22) mit einem rechten elastischen Element (92) konfiguriert ist; und das rechte elastische Element (92) ein rechtes Dehnungselement (921), das die rechten Enden der ersten Eingangswelle (31) und der zweiten Eingangswelle (32) seitlich berührt, und eine Vielzahl von rechten elastischen Elementen (922) umfasst, die seitlich auf das rechte Dehnungselement (921) drücken.

2. Laminiervorrichtung nach Anspruch 1, wobei das Leistungselement (43) über Zahnräder mit der ersten Eingangswelle (31) und der zweiten Eingangswelle (32) in Eingriff steht.

3. Laminiervorrichtung nach Anspruch 1, wobei die zwei Enden jedes Heizelements (6) beweglich mit der linken Platte (21) bzw. der rechten Platte (22) verbunden sind.

4. Laminiervorrichtung nach Anspruch 3, wobei eine Vielzahl von elastischen Stützelementen (7) jeweils an der linken Platte (21) und der rechten Platte (22) angeordnet sind, die die zwei Enden der Heizelemente (6) stützen.

5. Laminiervorrichtung nach Anspruch 1, wobei die erste Ausgangswelle (41) und die zweite Ausgangswelle (42) Querschnittsradien aufweisen, die größer als die der ersten Eingangswelle (31) und der zweiten Eingangswelle (32) sind.

## Revendications

1. Dispositif de stratification, comprenant :
un élément principal (1) ;
une fente d'entrée (11) sur un côté avant de l'élément principal (1) ;
une fente de sortie (12) sur un côté arrière de l'élément principal (1) opposée à la fente d'entrée (11) ;
une plaque gauche (21) à l'intérieur de l'élément principal (1) et adjacente à un côté gauche de l'élément principal (1) ;
une plaque droite (22) à l'intérieur de l'élément principal (1) et adjacente à un côté droit de l'élément principal (1) opposée à la plaque gauche (21) ;
un premier arbre d'entrée (31) à l'intérieur de l'élément principal (1) adjacent à la fente d'entrée (11) dont les deux extrémités sont reliées de manière pivotante à la plaque gauche (21) et à la plaque droite (22), respectivement ;
un deuxième arbre d'entrée (32) à l'intérieur de l'élément principal (1) adjacent à la fente d'entrée (11) dont les deux extrémités sont reliées de manière pivotante à la plaque gauche (21) et à la plaque droite (22), respectivement ;
un premier arbre de sortie (41) à l'intérieur de l'élément principal (1) adjacent à la fente de sortie (12) dont les deux extrémités sont reliées de manière pivotante à la plaque gauche (21) et à la plaque droite (22), respectivement ;
un deuxième arbre de sortie (42) à l'intérieur de l'élément principal (1) adjacent à la fente de sortie (12) dont les deux extrémités sont reliées de manière pivotante à la plaque gauche (21) et à la plaque droite (22), respectivement ;
un élément de puissance (43) à l'intérieur de l'élément principal (1) couplant et engageant le premier arbre de sortie (41) et le deuxième arbre de sortie (42) ;
une première courroie de transmission (51) entourant le premier arbre d'entrée (31) et le premier arbre de sortie (41) ;
une deuxième courroie de transmission (52) entourant le deuxième arbre d'entrée (32) et le deuxième arbre de sortie (42) ; et
une pluralité d'éléments chauffants (6) à l'intérieur de l'élément principal (1) et respectivement entourés par la première courroie de transmission (51) et la deuxième courroie de transmission (52), où chaque élément chauffant (6) comprend un élément chauffant (61) et une pièce de préchauffage (62) enveloppant l'élément chauffant (61), de telle sorte que la chaleur produite par les éléments chauffants (61) est conduite à la première courroie de transmission (51), à la deuxième courroie de transmission (52) et aux pièces de préchauffage (62),
où la plaque gauche (21) est configurée avec un élément élastique gauche (91) ; et l'élément élastique gauche (91) comprend un élément d'étirement gauche (911) en contact latéral avec les extrémités gauches du premier arbre d'entrée (31) et du deuxième arbre d'entrée (32), et une pluralité d'éléments élastiques gauches (912) pressant latéralement l'élément d'étirement gauche (911), et
où la plaque droite (22) est configurée avec un élément élastique droit (92) ; et l'élément élastique droit (92) comprend un élément d'étirement droit (921) en contact latéral avec les extrémités droites du premier arbre d'entrée (31) et du deuxième arbre d'entrée (32), et une pluralité d'éléments élastiques droits (922) pressant latéralement l'élément d'étirement droit (921).

2. Dispositif de stratification selon la revendication 1, où l'élément de puissance (43) engage le premier arbre d'entrée (31) et le deuxième arbre d'entrée (32) par l'intermédiaire d'engrenages.

3. Dispositif de stratification selon la revendication 1, où chaque élément chauffant (6) a ses deux extrémités reliées de manière mobile à la plaque gauche (21) et à la plaque droite (22), respectivement.

4. Dispositif de stratification selon la revendication 3, où une pluralité d'éléments de support élastiques (7) est respectivement configurée sur la plaque gauche (21) et la plaque droite (22) supportant les deux extrémités des éléments chauffants (6).

5. Dispositif de stratification selon la revendication 1, où le premier arbre de sortie (41) et le deuxième arbre de sortie (42) ont des rayons de section transversale supérieurs à ceux du premier arbre d'entrée (31) et du deuxième arbre d'entrée (32).
